# EUROPEAN PATENT SPECIFICATION

(11) **EP 3 524 098 B1**
(45) Date of publication and mention of the grant of the patent: **06.01.2021**
(21) Application number: 19156410.3
(22) Date of filing: 11.02.2019
(51) Int. Cl.: A47C 20/04, A47B 9/04, A47B 9/20

(54) **FURNITURE SYSTEM**
MÖBELSYSTEM
SYSTÈME DE MEUBLES

(30) Priority: 12.02.2018 DE 102018103067
(43) Date of publication of application: 14.08.2019
(73) Proprietor: Logicdata Electronic & Software Entwicklungs GmbH, 8530 Deutschlandsberg (AT)
(72) Inventor: Koch, Walter, 8541 Schwanberg (AT)
(74) Representative: Epping - Hermann - Fischer

(56) References cited:
- WO-A1-2017/039403
- TW-A- 201 707 612
- US-A1- 2017 221 350

## Description

The present disclosure relates to a furniture system comprising, in particular, an electrically adjustable piece of furniture.

Adjustable furniture is known both in the office furniture sector and in the home sector. The most common designs in the office furniture sector are, for example, electrically adjustable tables or chairs, while in the home sector electrically adjustable beds, seating furniture or reclining furniture are known.

Such adjustable furniture is not always powered directly by a mains voltage, but partly by batteries or accumulators. For example, there is furniture that allows emergency operation in the event of a power failure via battery or accumulator operation, for example in order to be able to reach at least a flat position in an electrically adjustable bed in the event of a failure of the mains voltage, which makes sleeping possible. Due to the limited energy of batteries and rechargeable batteries, however, only a few adjustment processes are possible with bare battery or rechargeable battery operation.

In conventional furniture, to charge the batteries or rechargeable batteries, the piece of furniture is connected to the public power grid in order to charge the batteries or rechargeable batteries directly via a charger powered by the mains voltage.

Occasionally, also solar cells are attached to the piece of furniture in order to charge the batteries or rechargeable batteries with the current generated by the solar cells. In this way, a certain independence from the mains voltage can be achieved under suitable lighting conditions. However, the charging times are usually long and the available energy is not always sufficient due to too little light.

US 2019/0021504 A1 discloses a table with a pressure sensing chair, wherein the table comprises means for wirelessly charging the chair.

One objective to be achieved is to specify an improved charging concept that makes it easier to charge an energy store in an electrically adjustable piece of furniture.

This objective is achieved by means of the independent claim. Modifications and developments are indicated in the dependent claims.

The improved charging concept is based on the idea of charging an electrical energy store which supplies an actuator of an adjustable piece of furniture via a wireless or contactless process, in particular without the piece of furniture itself having to be connected to the mains voltage of a public supply grid. For this purpose, a furniture system with the electrically adjustable piece of furniture and a separate energy transmission device is proposed, which can provide the necessary energy for charging the energy store without physical contact with the piece of furniture. For this purpose, inductive energy transmission methods or methods based on radio waves can be used, for example. The piece of furniture has a charging circuit for this purpose, which receives the emitted energy at least partially and uses it to charge the energy store if the distance to the energy transmission device is appropriate. Thus, the energy store of the piece of furniture can be charged without any special effort by the user in order to ensure continuous use of the adjustment functions of the piece of furniture.

In an example implementation of the improved charging concept, a furniture system with an electrically adjustable piece of furniture and an energy transmission device is proposed. The piece of furniture has at least one actuator for adjusting the piece of furniture, an electrical energy store for supplying the actuator during an adjustment process and a charging circuit for charging the energy store. The energy transmission device is configured to receive energy from an AC mains supply and to emit it wirelessly. The charging circuit is arranged to receive at least part of the energy delivered by the energy transmission device without physical contact with the energy transmission device and to use it to charge the energy store. In particular, the energy transmission device is independent of the piece of furniture, i.e. it is not part of the piece of furniture or mounted on the piece of furniture.

For example, the energy transmission device is arranged stationarily or movably in a room in which the piece of furniture is located. For example, the energy transmission device can be mounted in or on a wall. Alternatively, the energy transmission device may also be installed in or on a floor, for example in a floor structure.

It is also possible that the energy transmission device is installed in another piece of furniture that is included in the furniture system. For example, another piece of furniture can be selected that requires a connection to the AC mains supply anyway or can be connected to the AC mains supply with less effort. Such an additional piece of furniture can be, for example, a side table, a rolling cabinet or the like.

The energy store, for example, is implemented as an accumulator or rechargeable battery. The energy store is preferably concealed or integrated invisibly into the piece of furniture for human eyes, for example in a frame of the piece of furniture. If the piece of furniture is a table, the energy store can, for example, be accommodated in the table base or in the table frame. In the case of a bed, the energy store can be placed in a suitable position in the bed frame. In the case of an adjustable recliner, for example, the energy store can be located in the frame of the recliner, especially under a cover of the recliner.

According to the invention, the charging circuit comprises an energy receiving device and a charging controller which is designed to control the charging of the energy store with the energy received by the energy receiving device. The charging controller and the energy receiving device may be located in close proximity to each other, for example in a common housing. However, it may also be advantageous to physically separate the charging controller from the energy receiver.

For example, the charging controller is arranged in a housing of a controller for the at least one actuator. The energy receiving device can also be provided in the controller, but also separately, preferably at a suitable location of the piece of furniture, in order to be able to create the necessary spatial proximity to the energy transmission device.

According to the invention, the energy is transmitted based on a radio wave-based method, in particular a radio frequency, RF, method. An RF based charging technique has the advantage that not only larger distances can be spanned, but also that the energy receiving device does not have to be aligned excessively precisely with respect to the energy transmission device.

The energy transmission device and the energy receiving device are designed to transmit sufficient energy to charge the energy store up to a distance of 50 cm to 150 cm, in particular up to a distance of 60 cm to 90 cm, between the energy transmission device and the energy receiving device. The maximum distance sufficient for the energy transfer is thus, for example, within the specified distance ranges. Such distances can be achieved, for example, with the described radio wave-based or RF method.

In other implementations not covered by the claims, the energy is transmitted based on an inductive process. Usually, smaller distances between the energy transmission device and the energy receiving device are necessary than with a radio wave-based method. However, it may also be possible to transmit a higher amount of energy per time with the inductive method, which can accelerate the charging process.

In various implementations, the piece of furniture is implemented as a height-adjustable table, in particular as an office table. The energy receiving device can, for example, be arranged in a table frame or in a table foot of the table.

In other implementations, the piece of furniture is implemented as a bed with an adjustable head part and/or an adjustable foot part, in particular for a bedroom. The energy receiving device is arranged in a bed frame or in the foot of the bed, for example.

In other implementations, the piece of furniture is implemented for example as an adjustable reclining chair. For example, the energy receiving device can be arranged in a frame of the reclining chair, in particular under a cover of the reclining chair.

The listed pieces of furniture do not represent a conclusive selection of possible adjustable pieces of furniture. Other pieces of furniture can also be equipped with the improved charging concept. Preferably such pieces of furniture are used in the home or living area or in the office area.

In the above mentioned examples of positioning the energy receiving device on or in the piece of furniture, the latter is preferably not visible to a user of the piece of furniture, at least not during regular use of the piece of furniture.

In various implementations, the furniture system further comprises a manual operating device which is arranged for wireless connection to a controller for the at least one actuator, in particular for transmitting adjustment commands to the controller and for effecting adjustment of the piece of furniture by means of the actuator. The manual operating device has a further electrical energy store for supplying the manual operating device during an operating action and a further charging circuit for charging the further energy store. This way, the manual operating device can be charged via the same energy transmission device as the adjustable piece of furniture itself. The manual operating device is, for example, a remote control or another operating element which can be connected to the controller both unidirectionally and bidirectionally.

In particular, it may be possible for the energy store of the piece of furniture and the additional energy store of the manual operating device to be charged simultaneously.

If no immediate proximity, for example less than 5 cm, is required between the energy transmission device and the energy receiving device for charging, then if the energy transmission device is suitably positioned, the piece of furniture can remain in its position for charging and, in particular, does not have to be moved in order to be charged.

As mentioned, this is possible with a radio wave based or RF method, for example. In order to limit the electromagnetic radiation density in such a process and also to keep the losses in the energy transmitter, i.e. the energy transmission device, low, the maximum transmittable power is fixed at a certain level. This usually results in a slow charging process. However, this is of secondary importance especially for the aforementioned application for charging batteries or accumulators which supply one or more actuators of a furniture system with energy and which do not have to be operated in continuous operation. For example, tables in the office area can remain in their traditional places as long as they are within reach of one or more energy transmission devices. The energy store(s) can thus be constantly recharged and always provide sufficient energy for an adjustment. For example, in this way the energy stores collect enough energy overnight to make it possible to adjust an office desk during the day, at least in a sufficient number of standard adjustment processes.

With the higher range of the energy transmission device, it is also possible to charge several energy stores at the same time, i.e. in particular via several energy receiving devices.

In the case of shorter ranges, such as with an inductive energy transfer process, it may be necessary to align the energy receiver of the piece of furniture at least roughly with the energy transfer device if a charging process is to be started. In particular, it may be necessary to move the piece of furniture. For example, the piece of furniture in various embodiments therefore has rollers for moving the piece of furniture. This allows the piece of furniture to be positioned quickly and easily to a suitable position.

Although it is sufficient for a furniture system according to the improved charging concept if there is only one energy transmission device, it is not excluded that also several energy transmission devices are provided, for example to increase the number of possible positions of the piece of furniture where charging is possible.

The energy transmission devices, i.e. the modules on the mains voltage side, are required for the transmission of energy for the charging process but not for the control of the charging process. This makes it possible to produce the energy transmitters more cheaply, so that a user can be offered inexpensive modules. The user can thus use several modules per room or household or office building at low cost. By using several modules on the mains voltage side in one room, the supply of several pieces of furniture in a larger room can be ensured or faster loading made possible.

The mains voltage side module(s) can be installed at various positions in the room:
- mounted on the floor (raised), e.g. floor area on the wall. Several modules can be mounted along a wall on the floor.
- integrated in the floor (flush mounted)
- integrated in the wall (flush). E.g. by making the module compatible with standard switch programs and by mounting it in a conventional installation box and replacing a socket.
- mounted on the wall (raised): Here a simple retrofit option is particularly suitable: The module on the mains voltage side is plugged into an already available socket.

The energy store in the piece of furniture is preferably intended exclusively for supplying the actuator or an associated controller. Connecting other components, such as PCs, notebooks, smartphones or the like, would be possible in principle, but would require a higher charging capacity of the energy store. Preferably such a use is therefore excluded in order to be able to make the energy storage smaller and thus also cheaper.

In the following, the invention will be explained in detail with reference to the drawings using exemplary embodiments. Components that are functionally identical or have an identical effect can be provided with identical reference signs. Identical components or components with identical functions may only be explained with reference to the figure in which they appear first. The explanation is not necessarily repeated in subsequent figures.

In the drawings:
- Figure 1: shows an example of a furniture system with an electrically adjustable piece of furniture in the form of a table;
- Figure 2: shows a schematic block diagram of an example of a furniture system;
- Figure 3: shows another example of a furniture system with an electrically adjustable piece of furniture in the form of a table;
- Figure 4: shows another example of a furniture system with an electrically adjustable piece of furniture in the form of a table;
- Figure 5: shows an example implementation of a furniture system with an electrically adjustable piece of furniture in the form of a bed; and
- Figure 6: shows an example of a furniture system with an electrically adjustable piece of furniture in the form of a reclining chair.

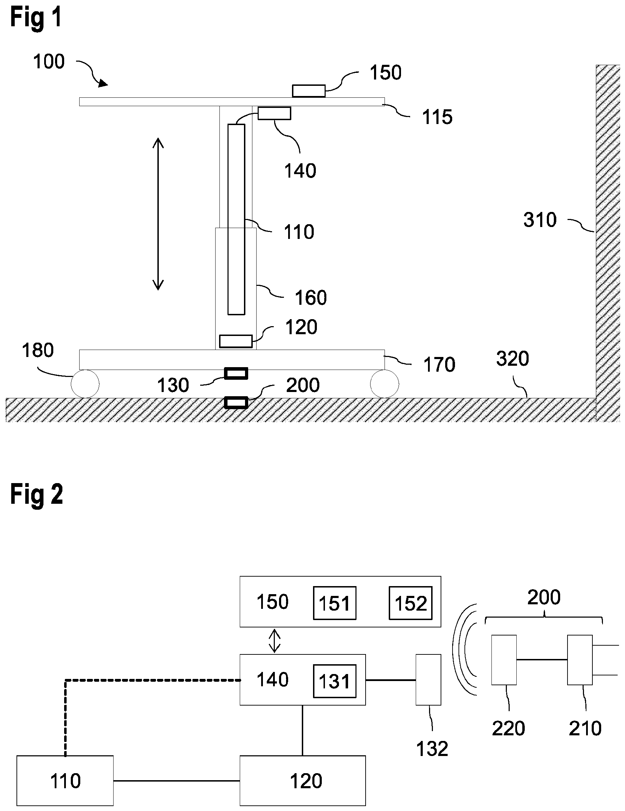

Figure 1 shows an example implementation of a furniture system with an electrically adjustable piece of furniture in the form of a table 100. The table 100 is designed, for example, as a height-adjustable table, in particular an office table, whereby the height of a table top 115 can be adjusted via an actuator 110, which is arranged in a table frame 160. Actuator 110 is controlled, for example, by a controller 140. Table frame 160, for example, is designed as a telescopic column. The table 100 also includes a table foot 170, to which rollers 180 are attached in this example.

The table is shown in a room with a wall 310 and a floor 320.

Via a manual operating device 150, which is shown lying on the table top 115 as an example, a user can transmit corresponding operating commands to the controller 140 in order to effect a height adjustment via the actuator 110.

The table 100 also includes an energy store 120, such as a rechargeable battery or accumulator, which serves as an energy source for supplying power to the actuator 110 or the controller 140 to trigger an adjustment process. In addition, a charging circuit 130 is provided in or at the table 100, which is designed to receive energy wirelessly and to use it to charge the energy store 120.

For this purpose, the furniture system also includes an energy transmission device 200, which in the present illustration is installed in floor 320. The energy transmission device 200 is adapted to receive energy from an AC mains supply, in particular from a 230 V or 115 V mains supply, and to deliver it wirelessly. As mentioned above, this energy is at least partially received by the charging circuit 130 and converted into a charging current for the energy store.

The manual operating device 150 can also have a corresponding charging circuit and its own energy store in order to charge this additional energy store from the energy emitted by the energy transmission device 200.

Figure 2 shows an example of a schematic block diagram of an example of a furniture system, in particular the components used for wireless charging and operation of the furniture. Among other things, the energy transmission device 200 is shown, which is formed by a mains connection 210 as a connection to the mains voltage and a mains voltage-side module 220. On the furniture side, the charging circuit 130 is formed by a charging controller 131 and an energy receiving device 132. The charging controller 131 is integrated in the controller 140. Alternatively, the charging controller 131 can also be arranged separately from the controller 140, for example in its own housing or together in a housing with the energy receiving device 132.

The charging controller 131 is connected to the energy store 120 for charging. Connections between the actuator 110 and the controller 140 and the energy store 120 respectively are also shown. This should represent the control of the actuator 110 by the controller 140 on the one hand and the provision of energy to the actuator 110 by the energy store 120 on the other hand. However, the actuator 110 can also be supplied from the energy storage 120 via the controller 140, so there would be no direct connection between the energy store 120 and the actuator 110.

The energy transfer between the mains-voltage side module 220 and the energy receiving device 132 is illustrated by corresponding energy waves.

Figure 2 also shows the manual operating device 150 with the components of a further energy store 151 and a further charging circuit 152, which also receives energy from the mains voltage-side module 220. In particular, the energy stores in the hand control unit 150 and in the piece of furniture can be charged simultaneously.

As already mentioned, wireless energy transmission takes place using a radio wave-based method, in particular an RF method. Differences exist in the possible range of the energy transmission and thus a possible necessity to bring the piece of furniture into the correct position for charging with regard to the energy transmission device 200 or the mains voltage-side module 220. In an inductive process, Which is not covered by the present invention, the distance between the mains-voltage side module 220 and the energy receiving device 132 is limited to a few cm, for example 5 cm to 10 cm, in order to enable charging. With reference to Figure 1, a relatively exact positioning of the table 100 or the charging circuit 130 above the energy transmission device 200 is therefore necessary.

With a radio wave-based method, larger distances, for example up to a distance of 50 to 150 cm, in particular up to a distance of 60 to 90 cm, can be enough to transmit sufficient energy for charging the energy store 120. Accordingly, the table 100 in Figure 1 can also be positioned elsewhere for charging.

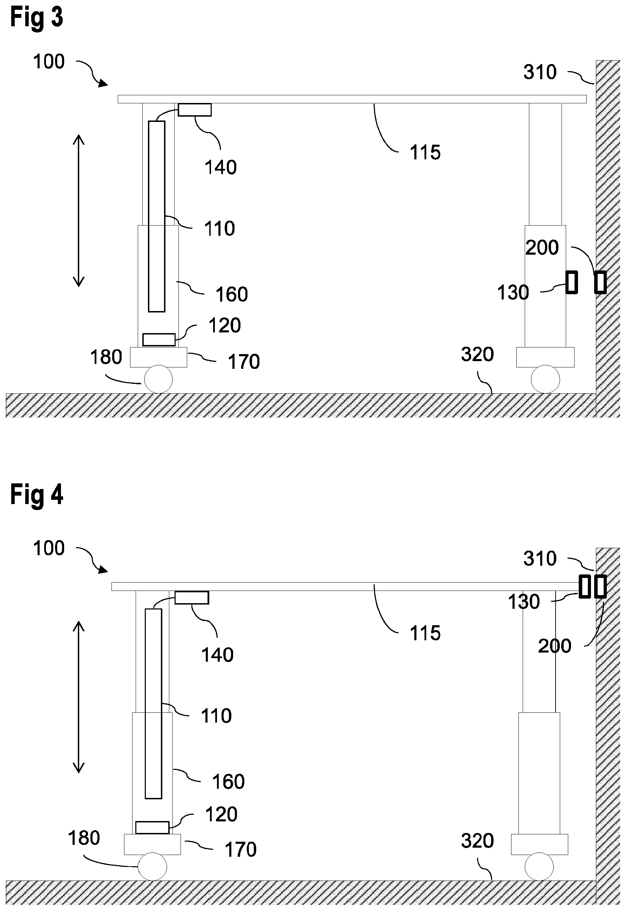

While Figure 1 shows the table 100 in a side view, Figure 3 and Figure 4 show the table 100 in a front view. The energy transmission device 200 is mounted in the wall 310, in particular integrated flush. For example, the mains-voltage-side module 220 of the energy transmission device 200 is compatible with standard switch programs for electrical installations and can be mounted in a conventional installation socket, for example as a replacement for a socket. Alternatively, the energy transmission device 200 could also be equipped directly with a mains plug, especially on the housing, which can be plugged into an available socket. This allows easy retrofitting with energy transmission devices.

With reference to Figure 3, the charging circuit 130, in particular the energy receiving device 132, is mounted in or on a telescopic frame part of the table, preferably at a corresponding height to the energy transmission device 200.

With reference to Figure 4, the charging circuit 130 or the energy receiving device 132 is mounted in the area of the table top 115, for example laterally or at a lower edge, again at the corresponding height to the existing energy transmission device 200.

The configurations shown in Figure 3 and Figure 4 are particularly suitable for inductive transmission methods, which are not covered by the present invention.

However, the same or at least similar arrangement of the energy transmission components 130, 200 could also be used with a radio wave-based method, whereby a larger distance would be possible for a charging process.

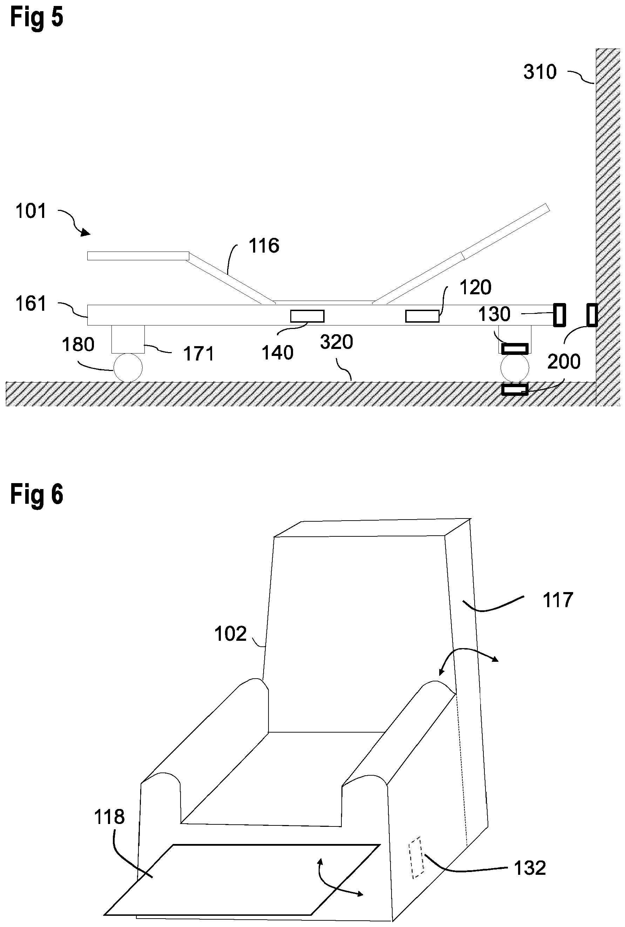

The improved charging concept is not only applicable to furniture systems with tables, but can also be applied to other pieces of furniture. For example, Figure 5 shows a furniture system in which the piece of furniture is conceived as a bed 101, with an adjustable head section and/or an adjustable foot section 116. For reasons of clarity, corresponding actuators are not shown. Similar to the configurations described above, a controller 140, an energy store 120 and a charging circuit 130 can be arranged in a frame or frame of the bed 101. Two possible variants are shown in Figure 5, namely the mounting in a bed frame 161 or in a bed foot 171, in particular for the charging circuit 130. Depending on the application, the energy transmission devices 200 are mounted in or on the wall 310 and/or in or on the floor 320.

Figure 6 shows a further possible configuration of the furniture system in which the piece of furniture is implemented as an adjustable reclining chair 102. For example, the reclining chair 102 has an adjustable back section 117 and/or an adjustable foot section 118. An energy receiving device 132 is mounted in a frame of the recliner, in particular under a cover of the recliner 102. An energy transmission device 200 is not shown in Figure 6 for reasons of clarity.

With regard to the energy transfer processes in the configurations according to Figure 5 and Figure 6, reference is made to the more detailed configurations above, in particular with regard to the table 100.

## Claims

1. A furniture system with an electrically adjustable piece of furniture (100, 101, 102) and an energy transmission device (200), wherein
- the piece of furniture (100, 101, 102) comprises at least one actuator (110) for adjusting the piece of furniture (100, 101, 102), an electrical energy store (120) for supplying the actuator (110) during an adjustment process, and a charging circuit (130) for charging the energy store (120);
- the energy transmission device (200) is adapted to receive energy from an AC mains supply and to deliver it wirelessly;
- the charging circuit (130) comprises an energy receiving device (132) and a charging controller (131) and is adapted to at least partially receive, using the energy receiving device (132), the energy output from the energy transmission device (200) without physical contact with the energy transmission device (200) and to use it to charge the energy store (120);
- the energy is transmitted from the energy transmission device (200) to the energy receiving device (132) based on a radio wave based method, in particular a high frequency method;
- the charging controller (131) is adapted to control charging of the energy store (120) with the energy received by the energy receiving device (132);
- the energy transmission device (200) and the energy receiving device (132) are designed to transmit sufficient energy from the energy transmission device (200) to the energy receiving device (132) for charging the energy store (120) up to a distance of 50 cm to 150 cm, in particular up to a distance of 60 cm to 90 cm; and
- a maximum power transmittable from said energy transmitting device (200) to said energy receiving device (132) is fixed to a predetermined level to limit an electromagnetic radiation density and to keep losses in the energy transmitting device (200) low.

2. The furniture system according to claim 1, wherein the piece of furniture comprises a controller (140) for the at least one actuator (110).

3. The furniture system according to claim 2, wherein the charging controller (131) is arranged in a housing of the controller (140) for the at least one actuator (110).

4. The furniture system according to claim 2 or 3, wherein the energy store in the piece of furniture is configured for exclusively supplying the actuator and/or the controller (140) .

5. The furniture system according to one of claims 1 to 4, which is adapted for constantly recharging the energy store (120) .

6. The furniture system according to one of claims 1 to 5, wherein the piece of furniture is implemented as a height-adjustable table (100), in particular as an office table, wherein the energy receiving device (132) is arranged in a table frame (160) or in a table foot (170) of the table (100) .

7. The furniture system according to one of claims 1 to 5, wherein the piece of furniture is implemented as a bed (101) with an adjustable head part and/or adjustable foot part, in particular for a bedroom, wherein the energy receiving device (132) is arranged in a bed frame (161) or in a bed foot (171) of the bed (101).

8. The furniture system according to one of claims 1 to 5, wherein the piece of furniture is implemented as an adjustable reclining chair (102), wherein the energy receiving device (132) is arranged in a frame of the reclining chair (102), in particular under a cover of the reclining chair (102).

9. The furniture system according to one of the preceding claims, wherein the energy transmission device (200) is mounted:
- in or on a wall (310); or
- in or on a floor (320); or
- in another piece of furniture comprised by the furniture system.

10. The furniture system according to one of the preceding claims, wherein the energy store (120) is formed as an accumulator or a rechargeable battery.

11. The furniture system according to one of the preceding claims, wherein the piece of furniture (100, 101, 102) comprises rollers (180) for moving the piece of furniture (100, 101, 102).

12. The furniture system according to one of the preceding claims, further comprising a manual operating device (150) adapted for wireless connection to a controller (140) for the at least one actuator (110), the manual operating device (150) comprising a further electrical energy store (151) for supplying the manual operating device (150) during an operating action and a further charging circuit (152) for charging the further energy store (151).

13. The furniture system according to claim 12, wherein the piece of furniture (100, 101, 102) and the manual operating device (150) are arranged to simultaneously charge the energy store (120) and the further energy store (151).

## Patentansprüche

1. Möbelsystem mit einem elektrisch verstellbaren Möbelstück (100, 101, 102) und einer Energieübertragungseinrichtung (200), wobei
- das Möbelstück (100, 101, 102) mindestens einen Aktuator (110) zum Verstellen des Möbelstücks (100, 101, 102), einen elektrischen Energiespeicher (120) zur Versorgung des Aktuators (110) während eines Verstellvorgangs sowie eine Ladeschaltung (130) zum Laden des Energiespeichers (120) aufweist;
- die Energieübertragungsvorrichtung (200) eingerichtet ist, Energie von einer Wechselstromnetzversorgung zu beziehen und diese drahtlos abzugeben;
- die Ladeschaltung (130) eine Energieempfangsvorrichtung (132) und eine Ladesteuerung (131) umfasst und dafür eingerichtet ist, unter Verwendung der Energieempfangsvorrichtung (132) die von der Energieübertragungsvorrichtung (200) abgegebene Energie ohne physischen Kontakt mit der Energieübertragungsvorrichtung (200) zumindest teilweise zu empfangen und zur Aufladung des Energiespeichers (120) zu verwenden;
- die Energie von der Energieübertragungsvorrichtung (200) zu der Energieempfangsvorrichtung (132) auf der Grundlage eines auf Radiowellen basierenden Verfahrens, insbesondere eines Hochfrequenzverfahrens, übertragen wird;
- die Ladesteuerung (131) eingerichtet ist, das Laden des Energiespeichers (120) mit der durch die Energieempfangsvorrichtung (132) empfangenen Energie zu steuern;
- die Energieübertragungsvorrichtung (200) und die Energieempfangsvorrichtung (132) so ausgelegt sind, dass sie genügend Energie von der Energieübertragungsvorrichtung (200) zu der Energieempfangsvorrichtung (132) übertragen, um den Energiespeicher (120) bis zu einem Abstand von 50 cm bis 150 cm, insbesondere bis zu einem Abstand von 60 cm bis 90 cm, aufzuladen; und
- eine maximale Leistung, die von der Energieübertragungsvorrichtung (200) zu der Energieempfangsvorrichtung (132) übertragbar ist, auf einen vorbestimmten Pegel festgelegt ist, um eine elektromagnetische Strahlungsdichte zu begrenzen und Verluste in der Energieübertragungsvorrichtung (200) gering zu halten.

2. Das Möbelsystem nach Anspruch 1, wobei das Möbelstück eine Steuerung (140) für den mindestens einen Aktuator (110) aufweist.

3. Das Möbelsystem nach Anspruch 2, wobei die Ladesteuerung (131) in einem Gehäuse der Steuerung (140) für den mindestens einen Aktuator (110) angeordnet ist.

4. Das Möbelsystem nach Anspruch 2 oder 3, wobei der Energiespeicher im Möbelstück zur ausschließlichen Versorgung des Aktuators und/oder der Steuerung (140) ausgebildet ist.

5. Das Möbelsystem nach einem der Ansprüche 1 bis 4, welches zum ständigen Nachladen des Energiespeichers (120) ausgelegt ist.

6. Das Möbelsystem nach einem der Ansprüche 1 bis 5, wobei das Möbelstück als höhenverstellbarer Tisch (100), insbesondere als Bürotisch, ausgeführt ist, wobei die Energieempfangseinrichtung (132) in einem Tischgestell (160) oder in einem Tischfuß (170) des Tisches (100) angeordnet ist.

7. Das Möbelsystem nach einem der Ansprüche 1 bis 5, wobei das Möbelstück als Bett (101) mit einem verstellbaren Kopfteil und/oder einem verstellbaren Fußteil, insbesondere für ein Schlafzimmer, ausgeführt ist, wobei die Energieempfangseinrichtung (132) in einem Bettrahmen (161) oder in einem Bettfuß (171) des Bettes (101) angeordnet ist.

8. Das Möbelsystem nach einem der Ansprüche 1 bis 5, wobei das Möbelstück als verstellbarer Ruhesessel (102) ausgeführt ist, wobei die Energieempfangseinrichtung (132) in einem Rahmen des Ruhesessels (102), insbesondere unter einer Abdeckung des Ruhesessels (102), angeordnet ist.

9. Das Möbelsystem nach einem der vorstehenden Ansprüche, wobei die Energieübertragungsvorrichtung (200) montiert ist:
- in oder an einer Wand (310); oder
- in oder auf einem Fußboden (320); oder
- in einem anderen Möbelstück, das zum Möbelsystem gehört.

10. Das Möbelsystem nach einem der vorstehenden Ansprüche, wobei der Energiespeicher (120) als Akkumulator oder als wiederaufladbare Batterie ausgebildet ist.

11. Das Möbelsystem nach einem der vorhergehenden Ansprüche, wobei das Möbelstück (100, 101, 102) Rollen (180) zum Bewegen des Möbelstücks (100, 101, 102) aufweist.

12. Das Möbelsystem nach einem der vorhergehenden Ansprüche, wobei das Möbelsystem ferner ein Handbediengerät (150) umfasst, das für eine drahtlose Verbindung mit einer Steuerung (140) für den mindestens einen Aktuator (110) ausgelegt ist, wobei das Handbediengerät (150) einen weiteren elektrischen Energiespeicher (151) zur Versorgung des Handbediengeräts (150) während eines Bedienvorgangs und eine weitere Ladeschaltung (152) zum Laden des weiteren Energiespeichers (151) umfasst.

13. Das Möbelsystem nach Anspruch 12, wobei das Möbelstück (100, 101, 102) und das Handbediengerät (150) eingerichtet sind, gleichzeitig den Energiespeicher (120) und den weiteren Energiespeicher (151) zu laden.

## Revendications

1. Un système de meubles avec un meuble réglable électriquement (100, 101, 102) et un dispositif de transmission d'énergie (200), dans lequel
- le meuble (100, 101, 102) comprend au moins un actionneur (110) pour le réglage du meuble (100, 101, 102), un accumulateur d'énergie électrique (120) pour alimenter l'actionneur (110) pendant un processus de réglage, et un circuit de charge (130) pour charger l'accumulateur d'énergie (120) ;
- le dispositif de transmission d'énergie (200) est adapté pour recevoir l'énergie d'une alimentation secteur en courant alternatif et pour la transmettre sans fil ;
- le circuit de charge (130) comprend un dispositif de réception d'énergie (132) et un contrôleur de charge (131) et est adapté pour recevoir au moins partiellement, en utilisant le dispositif de réception d'énergie (132), l'énergie produite par le dispositif de transmission d'énergie (200) sans contact physique avec le dispositif de transmission d'énergie (200) et pour l'utiliser pour charger le réservoir d'énergie (120) ;
- l'énergie est transmise du dispositif de transmission d'énergie (200) au dispositif de réception d'énergie (132) sur la base d'une méthode basée sur les ondes radio, en particulier une méthode à haute fréquence ;
- le contrôleur de charge (131) est adapté pour contrôler la charge du réservoir d'énergie (120) avec l'énergie reçue par le dispositif de réception d'énergie (132) ;
- le dispositif de transmission d'énergie (200) et le dispositif de réception d'énergie (132) sont conçus pour transmettre suffisamment d'énergie du dispositif de transmission d'énergie (200) au dispositif de réception d'énergie (132) pour charger le réservoir d'énergie (120) jusqu'à une distance de 50 cm à 150 cm, en particulier jusqu'à une distance de 60 cm à 90 cm ; et
- une puissance maximale pouvant être transmise dudit dispositif de transmission d'énergie (200) audit dispositif de réception d'énergie (132) est fixée à un niveau prédéterminé pour limiter une densité de rayonnement électromagnétique et pour maintenir les pertes dans le dispositif de transmission d'énergie (200) à un faible niveau.

2. Le système de meuble selon la revendication 1, dans lequel le meuble comprend un contrôleur (140) pour le au moins un actionneur (110).

3. Le système de meuble selon la revendication 2, dans lequel le contrôleur de charge (131) est disposé dans un boîtier du contrôleur (140) pour le au moins un actionneur (110).

4. Le système de meubles selon la revendication 2 ou 3, dans lequel le réservoir d'énergie dans le meuble est configuré pour alimenter exclusivement l'actionneur et/ou le contrôleur (140) .

5. Le système de meubles selon l'une des revendications 1 à 4, qui est adapté pour recharger en permanence le réservoir d'énergie (120).

6. Le système de meubles selon l'une des revendications 1 à 5, le meuble étant réalisé sous la forme d'une table (100) réglable en hauteur, en particulier d'une table de bureau, le dispositif de réception d'énergie (132) étant disposé dans un cadre de table (160) ou dans un pied de table (170) de la table (100).

7. Le système de meubles selon l'une des revendications 1 à 5, dans lequel le meuble est réalisé sous forme de lit (101) avec une partie de tête réglable et/ou une partie de pied réglable, en particulier pour une chambre à coucher, dans lequel le dispositif de réception d'énergie (132) est disposé dans un cadre de lit (161) ou dans un pied de lit (171) du lit (101).

8. Le système de meubles selon l'une des revendications 1 à 5, dans lequel le meuble est réalisé sous la forme d'une chaise longue réglable (102), dans lequel le dispositif de réception d'énergie (132) est disposé dans un cadre de la chaise longue (102), en particulier sous une housse de la chaise longue (102).

9. Le système de meubles selon l'une des revendications précédentes, dans lequel le dispositif de transmission d'énergie (200) est monté :
- dans ou sur un mur (310) ; ou
- dans ou sur un plancher (320) ; ou
- dans un autre meuble compris dans le système d'ameublement.

10. Le système de meubles selon l'une des revendications précédentes, dans lequel le réservoir d'énergie (120) est formé comme un accumulateur ou une batterie rechargeable.

11. Le système de meubles selon l'une des revendications précédentes, dans lequel le meuble (100, 101, 102) comprend des rouleaux (180) pour déplacer le meuble (100, 101, 102).

12. Le système de meubles selon l'une des revendications précédentes, comprenant en outre un dispositif de commande manuelle (150) adapté pour une connexion sans fil à une commande (140) pour le au moins un actionneur (110), le dispositif de commande manuelle (150) comprenant un autre réservoir d'énergie électrique (151) pour alimenter le dispositif de commande manuelle (150) pendant une action de fonctionnement et un autre circuit de charge (152) pour charger l'autre réservoir d'énergie (151).

13. Système de meubles selon la revendication 12, dans lequel le meuble (100, 101, 102) et le dispositif de commande manuelle (150) sont disposés de manière à charger simultanément le réservoir d'énergie (120) et le réservoir d'énergie supplémentaire (151).
